Europäisches Patentamt

European Patent Office

Office européen des brevets

(11) Numéro de publication: **0 249 571 B1**

# FASCICULE DE BREVET EUROPEEN

(45) Date de publication de fascicule du brevet:
10.07.91

(51) Int. Cl.⁵: **G02C 1/08**

(21) Numéro de dépôt: **87420157.7**

(22) Date de dépôt: **12.06.87**

(54) **Système d'assemblage indesserable pour articles de lunetterie et applications analogues.**

(30) Priorité: **13.06.86 FR 8608976**

(43) Date de publication de la demande:
**16.12.87 Bulletin 87/51**

(45) Mention de la délivrance du brevet:
**10.07.91 Bulletin 91/28**

(84) Etats contractants désignés:
**AT BE CH DE ES FR GB GR IT LI LU NL SE**

(56) Documents cités:
| | |
|---|---|
| **DE-A- 3 335 046** | **FR-A- 2 408 155** |
| **FR-A- 2 457 406** | **US-A- 1 521 484** |
| **US-A- 1 608 674** | **US-A- 2 740 327** |
| **US-A- 2 991 695** | |

(73) Titulaire: **Jeunet, Jean-Pierre**
**Rue de l'Evalude**
**F-39400 Morez(FR)**

(72) Inventeur: **Jeunet, Jean-Pierre**
**Rue de l'Evalude**
**F-39400 Morez(FR)**

(74) Mandataire: **Monnier, Guy et al**
**Cabinet Monnier 142-150 Cours Lafayette**
**B.P. 3058**
**F-69393 Lyon Cédex 03(FR)**

## Description

La présente invention a plus particulièrement trait à l'industrie de la lunetterie et elle vise l'assemblage mutuel de certains des éléments constitutifs des montures, tels notamment que les serre-cercle destinés à la retenue des verres à l'intérieur des drageoirs de la face des lunettes métalliques.

Cet assemblage est généralement obtenu à l'aide de vis qui permettent le démontage, par exemple pour le remplacement de l'un des verres dans le cas sus-envisagé des serre-cercle. La pratique démontre que ces vis, dont le filetage présente le plus souvent un pas rapide, se desserrent très aisément, de telle sorte que pour éviter tout risque de désolidarisation intempestive, il y a lieu de prévoir le blocage angulaire de chaque vis.

En pratique, on a recours à un certain nombre de moyens de blocage angulaire tendant à rendre la vis indesserrable. C'est ainsi qu'outre les systèmes classiques de collage ou de matage superficiel, on a notamment proposé :
- de ménager latéralement dans le taraudage destiné à recevoir la vis une cavité apte à loger un lardon ou clavette de retenue en matière synthétique-formant frein, (cf. DE-A-3 335 046 A. SCHMIED SILHOUETTE - MODELLBRILLEN) ;
- de faire comporter, à la face inférieure de la tête de la vis et au débouché correspondant du taraudage, des surfaces crantées propres à s'interpénétrer (cf.FR-A-2 457 406 ESSILOR INTERNATIONAL) ;
- ou encore de prévoir, sur la face terminale de la tête de la vis, au moins une ailette susceptible d'être déformée pour venir s'appliquer contre une paroi fixe (cf. US-A-2 740 327 R.F.E. STEGEMAN).

Toutefois, ces techniques connues ne donnent pas entière satisfaction, car si elles sont conduites de manière à se révéler réellement efficaces, elles s'opposent alors au retrait volontaire de la vis d'assemblage, par exemple à l'occasion du remplacement d'un verre dans le cas d'un serre-cercle, ou bien ne sont plus efficaces après quelques montages et démontages successifs.

C'est à cet inconvénient qu'entend principalement remédier l'invention, laquelle a pour objet le système d'assemblage indesserrable qui est défini à la revendication 1.

En fait l'invention consiste essentiellement à monter axialement sur la vis de fixation une douille dont la paroi extérieure conique est fendue longitudinalement de façon à pouvoir se déformer, tandis qu'on prévoit à l'intérieur de la partie lisse de l'alésage qui doit recevoir ladite vis un épaulement annulaire propre à venir porter, lors du vissage, contre la paroi conique de la douille pour l'appliquer par déformation contre le fût de cette vis qui est ainsi immobilisée angulairement.

Le dessin annexé, donné à titre d'exemple, permettra de mieux comprendre, l'invention, les caractéristiques qu'elle présente et les avantages qu'elle peut procurer :

Fig. 1 est une coupe axiale montrant, préalablement au montage, les différents éléments d'un système d'assemblage indesserrable établi conformément à l'invention

Fig. 2 est une vue en perspective de la douille, supposée isolée.

Fig. 3 reproduit fig. 1 après montage des éléments et serrage de la vis d'assemblage.

Fig. 4 et 5 sont vues correspondant à fig. 2, respectivement fig. 3, mais illustrant une variante de mise en oeuvre de l'invention.

Fig. 6 illustre une autre variante.

Sur ce dessin, on a supposé que l'invention était appliquée à l'assemblage de l'un des deux serre-cercle d'une monture de lunette en métal. Bien évidemment, la représentation a été faite à échelle agrandie de façon à permettre de mieux illustrer l'invention.

Les références 1 et 2 désignent les deux extrémités du cercle de la face de la monture, lequel cercle est creusé du drageoir qui est destiné à recevoir le bord d'un verre tel que 3. Le serre-cercle associé au cercle 1-2 comprend deux dés transversaux 4, respectivement 5, qui doivent être rapprochés et assemblés pour assurer la retenue en place du verre 3.

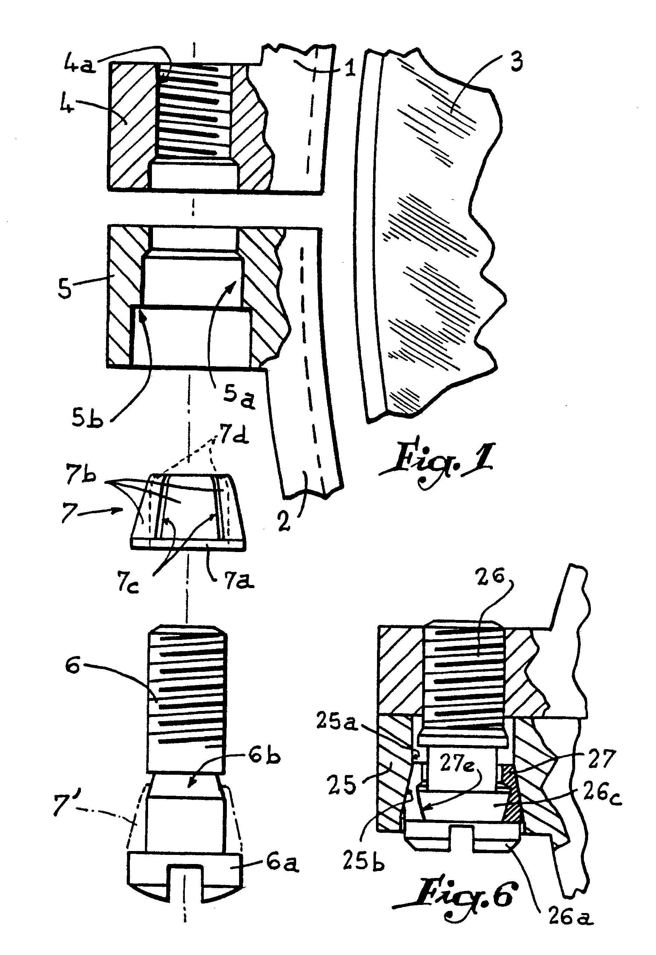

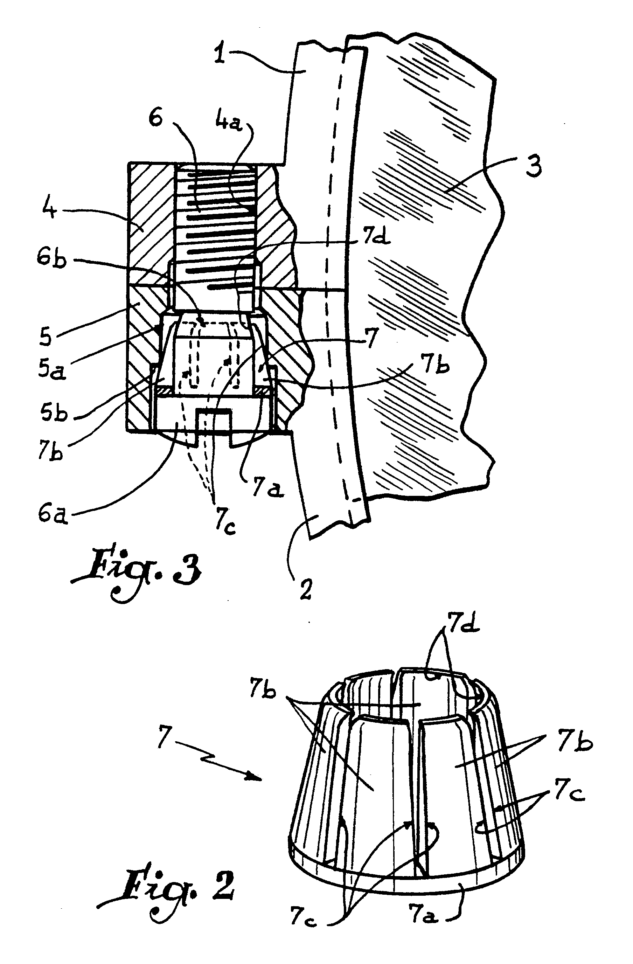

Le système d'assemblage suivant l'invention comprend une vis 6 associée à une douille 7. Dans la forme de réalisation envisagée en fig. 1 à 3 et comme bien montré en fig. 2, cette douille 7 comporte un anneau continu 7a, solidaire longitudinalement d'une série de mors 7b orientés de manière oblique, en conférant ainsi à l'ensemble de la douille un profil tronconique dont la grande base correspond à l'anneau 7a.

La vis 6 est destinée à traverser librement un alésage 5a pratiqué dans le dé 5, avant de se visser dans un taraudage correspondant 4a ménagé dans le dé 4. Conformément à l'invention, on a prévu à l'intérieur de l'alésage 5a un épaulement annulaire 5b, déterminé par deux parties de diamètres différents.

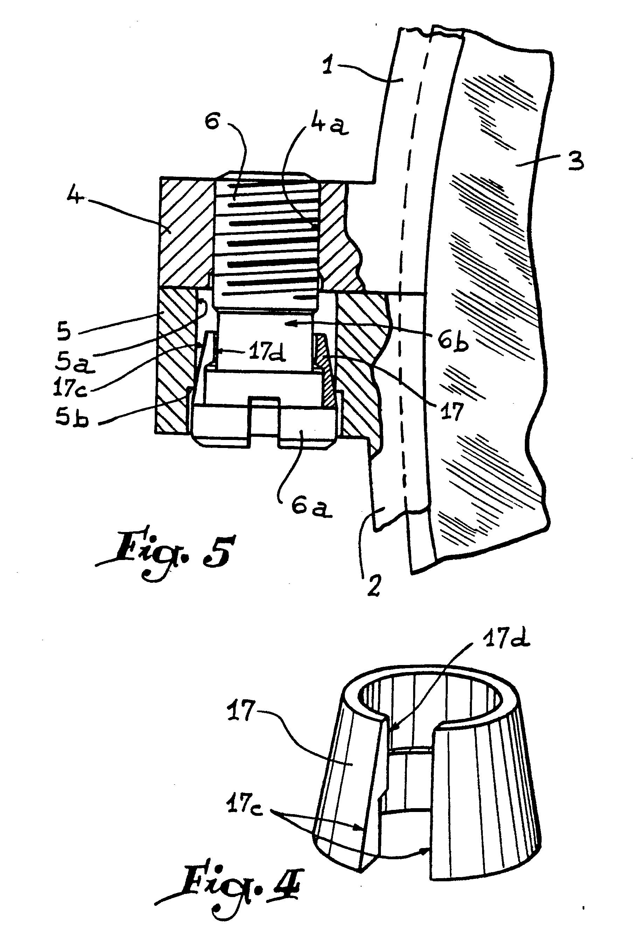

La douille 7 est engagée sur la vis 6 en étant tournée de façon à ce que son anneau 7a soit disposé contre la tête débordante 6a de ladite vis. On conçoit dans ces conditions que lorsque cette vis 6 est manoeuvrée angulairement au serrage pour se visser dans le taraudage 4a (voir fig. 3), les mors 7b, susceptibles de se déformer élastiquement par suite de leur indépendance mutuelle, viennent porter contre l'épaulement 5b qui les repoussent radialement vers l'intérieur, en obligeant ainsi lesdits mors à s'appliquer contre la partie lisse du fût de la vis 6. On observera que les bords longitudinaux 7c des mors 7b constituent des arêtes qui par ancrage contre l'épaulement 5b assurent l'immobilisation angulaire de la douille 7, de telle sorte que la vis 6 est ainsi énergiquement retenue dans le sens angulaire et ne peut se dévisser intempestivement, tout en restant susceptible d'être démontée en vue du remplacement du verre 3.

Les essais ont démontré que le système d'assemblage indesserrable suivant l'invention se révélait parfaitement efficace. On observera sur ce point que cette efficacité est encore renforcée par suite de la nature relativement maléable du maillechort qui constitue le plus souvent les cercles des montures métalliques et qui se mate au niveau de l'épaulement 5b.

Afin de rendre la douille 7 imperdable préalablement à son montage sur les montures de lunettes, on peut avantageusement faire comporter au fût de la vis 6 une gorge 6b propre à former butée pour les extrémités 7d, repliées vers l'intérieur à la manière de becs, des mors déformables 7b. Cette douille 7 est ainsi retenue sur la vis 6, à la manière illustrée en 7' en fig. 1.

On comprend que le nombre des mors 7b de la douille peut varier dans une large mesure. Fig. 4 et 5 illustrent une variante dans laquelle la douille, référencée 17, est découpée d'une fente longitudinale unique qui, après enlèvement de matière, détermine deux arêtes 17c. Le fonctionnement est identique, en ce sens que la douille 17 se déforme radialement sous l'action de l'épaulement 5b et vient s'appliquer contre la vis 6.

Dans le cas suivant fig. 1 à 3 comme dans celui suivant fig. 4 et 5, il convient d'observer que le retrait de la douille 7 ou 17 lors du dévissage manuel est assuré par portée du bord de la gorge 6b contre les becs 7d, 17d. Toutefois, il y a lieu de faire en sorte que le recul de la douille et la disparition de l'effet de retenue angulaire n'interviennent que moyennant une amplitude angulaire otable (un tour par exemple), de façon à permettre le réglage de la force de vissage sans provoquer la libération de la vis 6. Les essais ont démontré à ce sujet que le coincement est conservé même si la tête 6a de la vis 6 n'est plus en appui contre la douille 7, 17.

Lorsqu'on souhaite rendre le système pratiquement indémontable, on peut avoir recours à la variante illustrée en fig. 6, dans laquelle la douille, référencée 27, présente une portée intérieure 27e à profil conique propre à venir s'appliquer contre une portée correspondante 26c également à profil conique ménagée sur la vis 26 au droit de la tête 26a de celle-ci, tandis que l'alésage 25a du dé 25 comporte une partie 25b établie à un profil conique inverse de celui de la portée 26c. Cette partie 25b joue le même rôle que l'épaulement 5b pour comprimer radialement la douille 27 lors du serrage de la vis 26, mais l'inversion des profils coniques a pour résultat que le dévissage de la vis 26 assure encore la compression radial de la douille et accroît donc l'effet d'immobilisation angulaire de ladite vis.

On conçoit par ailleurs que si l'invention intéresse plus spécialement le domaine de la lunetterie, elle peut néanmoins trouver des applications avantageuses dans d'autres secteurs techniques présentant des problèmes de retenue angulaire équivalents.

**Revendications**

1. Système d'assemblage indesserable, par vis (6, 26), de deux parties (4, 5) d'un article de lunetterie ou analogue, dont l'une (5) présente un alésage (5a, 25a) à paroi lisse, tandis que l'autre (4) est percée d'un taraudage (4a), ladite vis étant propre à traverser ledit alésage avant de se visser dans ledit taraudage, lequel système comprend en outre des moyens de blocage (7, 17, 27, 5b, 25b) pour s'opposer au desserrage de la vis une fois serrée, caractérisé en ce que les moyens de blocage comprennent d'une part une douille (7, 17, 27) à paroi extérieure conique, fendue longitudinalement de façon à pouvoir se déformer de manière substantiellement radiale, ladite douille étant destinée à être engagée sur le fût de ladite vis de façon à pénétrer dans l'alésage par sa petite extrémité, et d'autre part un épaulement annulaire (5b, 25b) ménagé dans ledit alésage, l'arrangement étant tel que lors du vissage de la vis, la douille engagée sur celle-ci est déformée de manière substantiellement radiale par l'épaulement annulaire et est ainsi serrée contre le fût de la vis.

2. Système d'assemblage suivant la revendication 1, caractérisé en ce que la vis (6) est creusée d'une gorge (6b) apte à coopérer avec au moins un bec terminal (7d, 17d) prévu au niveau de l'extrémité à petit diamètre de la douille (7, 17) en vue de rendre celle-ci imperdable une fois engagée sur ladite vis.

3. Système d'assemblage suivant la revendication 1, caractérisé en ce que l'épaulement annulaire est constitué par une partie conique (25b) tandis que la douillie (27) comporte une portée intérieure (27e) présentant un profil conique orienté à l'opposé, afin de venir s'appliquer contre une portée équivalente (26c) prévu sur la vis de serrage (26) pour interdire

## Claims

1. Self-locking system for assembling, by screws 6, 26, two parts 4, 5 of an article of spectacles or the like, of which one (5) presents a smooth-walled bore 5a, 25a, whilst the other (4) is pierced with a tapping 4a, said screw being adapted to traverse said bore before being screwed in said tapping, which system comprises in addition blocking means 7, 17, 27, 5b, 25b for opposing unscrewing of the screw once tightened, characterized in that the blocking means comprise, on the one hand, a bush 7, 17, 27 with conical outer wall, slit longitudinally so as to be able to deform in substantially radial manner, said bush being adapted to be engaged on the shank of said screw so as to penetrate in the bore by its small end, and, on the other hand, an annular shoulder 5b, 25b made in said bore, the arrangement being such that, during screwing of the screw, the bush engaged thereon is deformed in substantially radial manner by the annular shoulder and is thus tightened against the shank of the screw.

2. System of assembly according to Claim 1, characterized in that the screw 6 has a groove 6b hollowed out therein, adapted to cooperate with at least one terminal edge 7d, 17d provided at the level of the small-diameter end of the bush 7, 17 with a view to rendering the latter captive once engaged on said screw.

3. System of assembly according to Claim 1, characterized in that the annular shoulder is constituted by a conical part 25b whilst the bush 27 comprises an inner bearing surface 27e presenting a conical section oriented opposite, in order to be applied against an equivalent bearing surface 26c provided on the locking screw 26 in order to prevent dismounting of the system.

## Ansprüche

1. Festsitzendes Zusammenbausystem mit Schraube (6, 26) aus zwei Teilen (4, 5) eines Artikels der Brillenmacherei oder dergleichen, dessen eines Teil (5) eine Bohrung (5a, 25a) mit glatter Wand aufweist, während das andere Teil (4) von einer Schraubbohrung (4a) durchsetzt ist, wobei die Schraube so ausgebildet ist, daß sie die Bohrung durchquert, bevor sie sich in die Schraubbohrung hineindreht, und das System im übrigen Blockadeeinrichtungen (7, 17, 27, 5b, 25b) aufweist, die sich dem Losdrehen der einmal festgezogenen Schraube entgegensetzen, dadurch gekennzeichnet, daß die Blockadeeinrichtungen einerseits eine Hülse (7, 17, 27) mit äußerer konischer Wand umfaßt, die in Längsrichtung geschlitzt ist, um sich im wesentlichen in radialer Richtung deformieren zu können, wobei die Hülle dazu bestimmt ist, am Schaft der Schraube anzuliegen, um so mit ihrem kleineren Ende in die Bohrung einzudringen, und andererseits eine Ringschulter (5b, 25b) in der Bohrung aufweist, wobei die Anordnung derart ist, daß beim Festschrauben der Schraube die auf der Schraube sitzende Hülse im wesentlichen in radialer Richtung durch die Ringschulter deformiert und so gegen den Schaft der Schraube gepreßt wird.

2. Zusammenbausystem nach Anspruch 1, dadurch gekennzeichnet, daß die Schraube (6) mit einer Nut (6b) versehen ist, die mit mindestens einem endständigen Schnabel (7d, 17d) zusammenarbeiten kann, die in der Ebene des Endes mit kleinem Durchmesser der Hülse (7, 17) vorgesehen ist, um diese nach Aufbringen auf der Schraube unverlierbar zu machen.

3. Zusammenbausystem nach Anspruch 1, dadurch gekennzeichnet, daß die Ringschulter durch ein konisches Teil (25b) gebildet wird, während die Hülse (27) eine innere Schrägfläche (27e) aufweist, die ein entgegengesetztes konisches Profil darstellt, um sich gegen eine entsprechende Schrägfläche (26c) auf der Anpreßschraube (26) anzulegen und die Demontage des Systems zu verhindern.

le démontage du système.

*Fig.1*

*Fig.6*

*Fig. 3*

*Fig. 2*

Fig. 5

Fig. 4